# EUROPÄISCHE PATENTSCHRIFT

(11) **EP 2 504 740 B1**
(45) Veröffentlichungstag und Bekanntmachung des Hinweises auf die Patenterteilung: **27.08.2014**
(21) Anmeldenummer: 10824262.9
(22) Anmeldetag: 26.10.2010
(51) Int. Cl.: G05B 19/05

(54) **SICHERHEITSMODUL FÜR EIN AUTOMATISIERUNGSGERÄT**
SECURITY MODULE FOR AN AUTOMATION DEVICE
MODULE DE SÉCURITÉ POUR UN APPAREIL D'AUTOMATISATION

(30) Priorität: 23.11.2009 DE 102009054155
(43) Veröffentlichungstag der Anmeldung: 03.10.2012
(73) Patentinhaber: ABB AG, 68309 Mannheim (DE)
(72) Erfinder: NEUPÄRTL, Heinrich, 68623 Lampertheim (DE); GLÖCKNER, Gerd, 69121 Heidelberg (DE); BOHN, Robert, 69259 Wilhelmsfeld (DE); ERLER, Peter, 79669 Bad Schönborn (DE); GÖLZ, Michael, 76227 Karlsruhe (DE)
(86) Internationale Anmeldenummer: PCT/EP2010/006520
(87) Internationale Veröffentlichungsnummer: WO 2011/060872

(56) Entgegenhaltungen:
- EP-A1- 1 396 772
- EP-A2- 1 703 346
- DE-A1- 10 330 916
- DE-A1- 19 928 517
- DE-A1-102004 056 363
- DE-A1-102004 061 013
- US-A1- 2005 063 114
- US-B2- 7 319 406

## Beschreibung

Die Erfindung betrifft ein Sicherheitsmodul zum Anschluss an ein Automatisierungssystem oder Automatisierungsgerät, wobei das Automatisierungssystem zum Steuern von sicherheitskritischen und nichtsicherheitskritischen Prozessen und/oder Anlagenkomponenten gemäß Anspruch 1 vorgesehen ist. Das Sicherheitsmodul kann sowohl ein Eingabe- Sicherheitsmodul, ein Ausgabe- Sicherheitsmodul oder auch ein Ein- und Ausgabe- Sicherheitsmodul sein. Das erfindungsgemäße Ein-/ Ausgabe-Sicherheitsmodul findet insbesondere Verwendung in der Prozessautomation oder Maschinensteuerung.

Für Automatisierungssysteme zur Steuerung eines technischen Prozesses oder einer technischen Anlage ist es oftmals erforderlich besondere sicherheitskritische Prozess- oder Anlagenkomponenten getrennt von nichtsicherheitskritischen Komponenten zu steuern. Die dazu erforderlichen Baugruppen, wie sicherheitsgerichtete Controller und daran angeschlossene sichere Ein-/ Ausgabemodule, auch als E-/A- Sicherheitsmodule bezeichnet, sind beispielsweise in der DE 10 2004061 013 A1 offenbart. Die dort beschriebenen Ein-/Ausgabebaugruppen weisen neben Steuerschnittstellen zusätzlich Mittel zur Überwachung der in den Ein-/Ausgabebaugruppen integrierten redundant ausgeführten Feldgeräteanschlussbaugruppen auf, wobei die Feldgeräteanschlussbaugruppe mittels einer der Steuerschnittstellen an das Überwachungsmittel angeschlossen ist und das Überwachungsmittel über weiteren Steuerschnittstellen mit einem Controller kommuniziert. Die Feldgeräteanschlussbaugruppen sind beispielsweise als Standard-Baugruppen zur Erfassung von Prozessdaten ausgeführt.

Weitere sichere Ein-/ Ausgabemodule sind in der EP 1 703 346 A2 und US 7319 406 B2 beschrieben. Die dort gezeigten als Ein-/ Ausgabeeinheiten arbeitenden Sicherheitsmodule besitzen kein weiteres nichtsicherheitsgerichtetes Kommunikations-Board zur Übertragung von sicheren und nicht sicheren Daten von/zu einer Zentraleinheit. Hiermit fehlt in den vorab genannten Systemen eine einfache Möglichkeit eine Standard-Schnittstelle für sichere und nicht sichere Ein-/ Ausgabemodule zu definieren.

Auch gestaltet es sich oftmals als schwierig, die sicherheitskritischen Funktionen von den nicht sicherheitskritischen Funktionen eindeutig zu trennen.

Die vorab beschriebenen sicheren Ein-/ Ausgabemodule sind für einen Einsatz in modular aufgebauten Steuerungssystemen, wie sie beispielsweise in der DE 102004056363 A1 beschrieben sind, nicht geeignet bzw. nur mit einem zusätzlichen Hardware- und Entwicklungsaufwand in ein bestehendes modular aufgebautes Steuerungssystem integrierbar. Ein anderes Beispiel der genannten Art wird in der DE 103 30916 A1 beschrieben.

Der Erfindung liegt demgemäß die Aufgabe zugrunde, ein sicheres Ein- / Ausgabemodul anzugeben, welches vorzugsweise in modular aufgebauten Automatisierungssystemen zum Steuern von sicherheitskritischen und nichtsicherheitskritischen Prozessen und/oder Anlagenkomponenten einsetzbar ist und vorgenannte Nachteile vermeidet. Insbesondere soll das erfindungsgemäße Sicherheitsmodul, nachfolgend auch mit Ein-/ Ausgabe- Sicherheitsmodul oder E/A-Sicherheitsmodul bezeichnet, dafür geeignet sein, ein vorhandenes modular aufgebautes nicht sicheres Steuersystem mit einen Ein-/ Ausgabe- Sicherheitsmodul auf einfache und kostengünstige Weise auszustatten.

Diese Aufgabe wird erfindungsgemäß durch ein Ein-/Ausgabe- Sicherheitsmodul der eingangs genannten Art mit den im Anspruch 1 angegebenen Merkmalen gelöst. Vorteilhafte Ausgestaltungen und Verbesserungen der erfindungsgemäßen Einrichtung sind in weiteren Ansprüchen und in der Beschreibung angegeben.

Das erfindungsgemäße Ein-/ Ausgabe- Sicherheitsmodul ist zum Anschluss an ein Automatisierungsgerät oder Automatisierungssystem vorgesehen, welches zum Steuern von sicherheitskritischen und nichtsicherheitskritischen Prozessen und/oder Anlagenkomponenten einsetzbar ist.

Das Ein- /Ausgabe- Sicherheitsmodul umfasst ein Kommunikations- Board, dessen Verarbeitungseinheit über einen Ein/Ausgabe- Bus- Slave und einen daran angeschlossenen externen Ein-/ und Ausgabe- Bus an eine Zentraleinheit (CL) anschließbar ist, die für die Steuerung des nicht sicherheitskritischen Prozesses und/oder der nicht sicherheitskritischen Anlagenkomponenten vorgesehen ist, sowohl als auch für sicherheitskritischen Prozesse und/oder der sicherheitskritischen Anlagenkomponenten.

Erfindungsgemäß ist auf dem Kommunikations- Board ein interner, vorzugsweise als serielle Schnittstelle ausgeführter, Kommunikations- Master vorgesehen, der über wenigstens eine daran anschließbare erste Kommunikationsverbindung und mit sicheren Verarbeitungseinheiten einer oder mehreren Leiterplatten mit sicherheitsgerichteten Ein-/Ausgabeschaltungen für sicherheitsgerichtete Funktionen so verbunden ist, dass wenigstens eine sicherheitsgerichtete Leiterplatte mit dem Kommunikations- Board Telegrammen austauschen kann.

An die sicherheitsgerichteten Ein-/ Ausgabeschaltungen sind weiterhin über eine entsprechende Schnittstelle Feldgeräte für sicherheitskritische Prozessen und/oder Anlagenkomponenten anschließbar.

Zwischen den sicheren Verarbeitungseinheiten ist zur Synchronisation bzw. zum Datenabgleich untereinander eine Synchronisationsverbindung vorgesehen, wodurch sich die sicheren Verarbeitungseinheiten gegenseitig überwachen und synchronisieren.

Die Überwachungs- und Synchronisationsmechanismen können beispielsweise nach "PROFlsafe - Profile for Safety Technology on PROFIBUS DP and PROFINET IO Profile part, related to IEC 61784-3-3 Specification for PROFIBUS and PROFINET. Version 2.4, March, 2007, Order No: 3.192b" oder ähnlich ausgeführt werden

Weiterhin ist erfindungsgemäß vorgesehen, dass nur über einen der auf den Leiterplatten für die sicherheitsgerichtete Funktionen befindlichen Sicherheitsprozessoren und den entsprechenden internen Kommunikations-Slave sicherheitsgerichtete Telegramme zur Verarbeitungseinheit des Kommunikations- Board's mittels wenigstens einer zweiten internen Kommunikationsverbindung über den internen Kommunikations- Master übertragbar sind. Dadurch ist sichergestellt, dass von den Sicherheitsprozessoren nur einer die sicherheitsgerichtete Telegramme zum internen Kommunikationsmaster des Kommunikations- Board sendet.

In einer Ausgestaltung des erfindungsgemäßen Ein-/ Ausgabe- Sicherheitsmodul ist die zweite interne Kommunikationsverbindung so ausgeführt, dass darüber auch die vom Kommunikations- Board gesendeten Telegramme empfangbar sind.

In vorteilhafter Weise wickelt das Kommunikations- Board die sicherheitsgerichtete Kommunikation über den auf der Zentraleinheit angeordneten externen Ein-/ Ausgabe- Busmaster unter Nutzung eines sogenannten Black Channel Kommunikationsprinzips zu den internen seriellen Kommunikations- Slaves der Leiterplatten mit für die sicherheitsgerichtete Funktionen, im Folgenden auch als Safety Control Boards bezeichnet, ab.

Das Kommunikations- Board übernimmt dabei für die sicherheitsgerichtete Kommunikation mit den Safety Control Board's die Aufgabe mittels eines integrierten Sicherheitslayers die sicherheitsgerichteten Telegramme an einen auf einer Zentraleinheit angeordneten externen Ein-/ Ausgabe- Busmaster weiterzuleiten.

Dazu wird das sogenannte "Black Channel Kommunikationsprinzips" verwendet, welches eine sichere Übertragung sicherheitsgerichteter Protokolle ermöglicht und beispielsweise aus "PROFlsafe - Profile for Safety Technology on PROFIBUS DP and PROFINET IO Profile part, related to IEC 61784-3-3 Specification for PROFIBUS and PROFINET. Version 2.4, March, 2007, Order No: 3.192b" bekannt ist.

Durch die Trennung in Kommunikations- Board und Sicherheitsbaugruppen wird in vorteilhafter Weise erreicht, dass die sicherheitsgerichtete Teile in Ein-/Ausgabe- Sicherheitsmodule strikt von der nicht sicherheitskritischen Kommunikation getrennt sind. Hiermit reduziert sich deutlich der Entwicklungsaufwand neuer EIA- Sicherheitsmodule und die sicherheitskritischen Funktionen von den nicht sicherheitskritischen Funktionen strikter getrennt werden können.

In einer anderen vorteilhaften Ausgestaltung ist vorgesehen, ein E-/A- Sicherheitsmodul dahingehend aufzubauen, dass vorhandene Safety Control Board's mit dem vorab beschriebenen Kommunikations- Board aufgerüstet werden und nur noch die internen Kommunikationsverbindungen zwischen den Safety Control Board's und dem Kommunikations- Board hinzugefügt werden.

In einer bevorzugten Ausführungsform weist das E/A- Sicherheitsmodul eine redundante interne 1002 (1 von 2)- Sicherheitsarchitektur, bestehend aus zwei Sicherheitsprozessoren mit entsprechenden Einheiten zum Datenaustausch untereinander auf. Um eine schnelle Synchronisierung und/oder Überwachung zwischen den Sicherheitsprozessoren zu ermöglichen, sind die Einheiten zum Datenaustausch vorzugsweise als Dual Port RAM ausgeführt. Die Dual-Port RAM's sind so ausgeführt, dass an seinen beiden Zugriffsseiten gleichzeitige Lese- und/oder Schreibzugriffe möglich sind, so dass ein gleichzeitiger Zugriff für zwei ansonsten getrennte Systeme möglich ist, die mit gemeinsamen Daten arbeiten ohne dass sich die ansonsten getrennten Systeme gegenseitig in der Zugriffsgeschwindigkeit einzuschränken. Dadurch wird die Zugriffszeit auf die zu übertragenen sicherheitsgerichteten Telegramme deutlich erhöht.

Das Ein-/Ausgabe- Sicherheitsmodul kann aber auch in einer von der 1002 (1von 2)-Architektur verschiedenen Sicherheitsstruktur, beispielsweise als eine 1003- Architektur etc, aufgebaut sein. In der beschriebenen 1002- Architektur ist der Sicherheitsprozessor, der sich direkt mit dem Kommunikations- Board Telegramme austauschen kann, nicht in der Lage ein Cyclic Redundancy Checksum (CRC - ein Verfahren zur Bestimmung eines Prüfwerts für Daten, um Fehler bei der Übertragung oder Speicherung erkennen zu können) zu ermitteln, das zum Generieren von gültigen sicheren Telegramme über einer interne Kommunikationsverbindung notwendig ist. Diese CRC- Ermittlung kann nur von dem redundanten Prozessor durchgeführt und zum ersten Prozessor mitgeteilt werden. Hiermit wird sichergestellt, dass beide Prozessoren an gültigen Telegrammen mitwirken. Dies ist erforderlich, um die Sicherheit des Systems beim Ausfall oder fehlerhafter Funktionsweise eines der beiden Prozessoren des Safety Controllers zu gewährleisten.

Das Ein-/Ausgabe- Sicherheitsmodul mit den, vorzugsweise zwei, redundanten Verarbeitungseinheiten für die sicherheitskritischen Ein- und Ausgangsschaltungen kann entsprechend der Ausführung der sicherheitsgerichteten Ein-/Ausgabeschaltungen auf den Safety Control Board's als sichere analoge und/oder digitale E-/A Schaltungen flexibel für unterschiedliche Funktionen eingesetzt werden, beispielsweise zur Verbindung mit analogen und/oder digitalen Ein- und Ausgängen der Feldgeräte.

Auch ist das Ein-/Ausgabe- Sicherheitsmodul in größeren Automatisierungssystemen, als dezentrales Ein- und/oder Ausgabegerät in einem solchen dezentralisierten größeren Automatisierungssystem, oder in Stand-alone Automatisierungsgeräten als lokal ankoppelbares Ein-/Ausgabegerät einsetzbar.

Ein weiterer Vorteil des erfindungsgemäßen Sicherheitsmoduls ergibt sich daraus, dass ein, vorzugsweise modular aufgebautes, Steuersystem für nicht sicherheitskritische Anwendungen in einfacher und kostengünstiger Weise ohne umfangreichen Hardwareaufwand auch für sicherheitskritische Anwendungen ertüchtigt werden kann.

Anhand der in der folgenden Figuren dargestellten Ausführungsbeispielen sollen die Erfindung sowie vorteilhafte Ausgestaltungen und Verbesserungen der Erfindung näher erläutert und beschrieben werden.

Es zeigen:
- **Fig. 1**: eine beispielhafte Ausführungsform eines modular aufgebauten Steuerungssystems für die Steuerung sicherheitsgerichteter und nichtsicherheitsgerichteter Prozesse mit den erfindungsgemäßen Sicherheitsmodulen,
- **Fig. 2**: eine detaillierte Ausführungsform des erfindungsgemäßen Sicherheitsmoduls in einer 1002 Architektur und die Kommunikation innerhalb des Sicherheitsmoduls und über den externen Ein-/Ausgabebus zur Zentraleinheit und/oder über die Buskoppler zu weiteren dezentralen Einheiten, und
- **Fig. 3**: eine beispielhafte Hardwarestruktur des Sicherheitsmoduls basierend auf einer 1002 Sicherheitsstruktur.

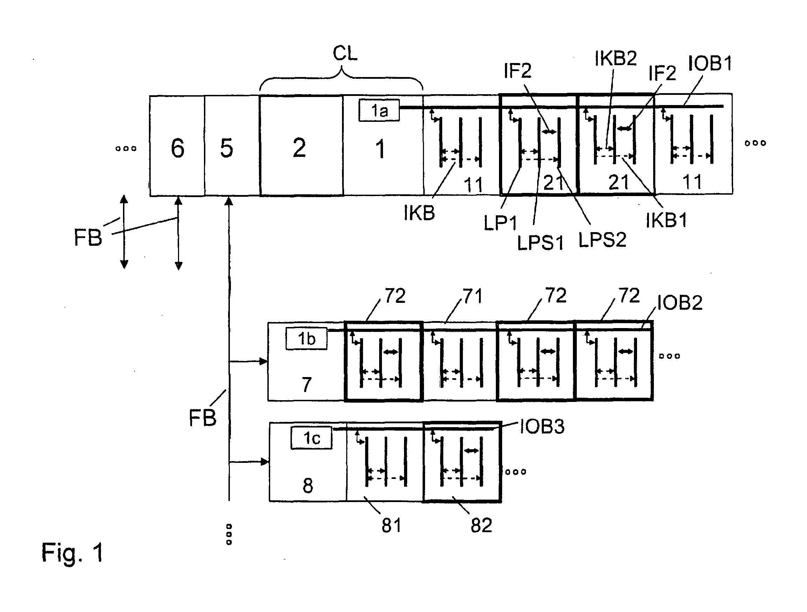

**Fig.** 1 zeigt ein modular aufgebautes Steuer- bzw. Automatisierungssystem mit einer eine ersten Steuereinheit 1, die für die Steuerung von nicht sicherheitskritischen Prozessen und/oder nicht sicherheitskritischen Anlagenkomponenten vorgesehen ist, mit daran angeschlossenen Modulen der zentralen Eingabe-/ Ausgabeeinheiten 11, 21, die über einen vorzugsweise als Rückwandbus ausgeführten sogenannten externen Ein- /Ausgabebus IOB1 und einen in der ersten Steuereinheit integrierten Ein-/Ausgabe- Bus- Master 1a jeweils mit der ersten Steuereinheit 1 verbunden sind, und optional mit wenigstens einem als Feldbus-Masterkoppler ausgeführtem Kommunikationskopplermodul 5, 6, welches die Kommunikation über den Feldbus FB mit einer Vielzahl von Feldbus-Slaves 7, 8 und daran angeschlossenen Eingabe-/ Ausgabeeinheiten 71, 72, 81, 82 steuert.

Die Bus- Masterkoppler 5, 6 sind beispielsweise jeweils über einen internen Kopplerbus, der gleichartig zum Kommunikationskoppler 5, 6 aufgebaut ist, mit der ersten Steuereinheit 1 verbunden.

Weiterhin ist wenigstens eine zweite Steuereinheit 2, nachfolgend auch als Safety Controller bezeichnet, für die Steuerung von sicherheitskritischen und/oder sicherheitskritischen Anlagenkomponenten vorgesehen. Der Safety Controller 2 umfasst zur Bereitstellung der sicherheitsgerichteten Funktionen wenigstens zwei Prozessoren und eine erste, vorzugsweise als Dual-Port RAM ausgeführte Schnittstelle, wobei nur einer der beiden Prozessoren mit dem Dual-Port RAM verbunden ist. Der Safety Controller 2 kommuniziert über den Dual-Port RAM mit der ersten Steuereinheit 1.

Die Ein-/ Ausgabeeinheiten umfassen sowohl sichere Einheiten 21, 72, 82 mit Sicherheitsfunktion als auch nicht sichere Einheiten 11, 71, 81 ohne Sicherheitsfunktion.

Die erste Steuereinheit 1 bildet mit dem Safety Controller 2, einer Spannungsversorgungseinheit und einer Anzeige- und/oder Bedieneinheit ein Modul für die Zentraleinheit CL eines Steuerungs- bzw. Automatisierungssystems.

Sowohl die direkt mit dem Modul für die Zentraleinheit CL verbundenen Module der sogenannten zentralen Eingabe-/ Ausgabeeinheiten 11, 21 als auch die Module der dezentralen Einheiten 71, 72, 81, 82 können, wie vorab schon ausgeführt, entsprechend ihrer Funktion sowohl als sicherheitsgerichtete als auch nicht sicherheitsgerichtete Geräte ausgeführt sein.

Die in der Fig. 1 dargestellten dezentralen Einheiten 71, 72, 81, 82 sind ebenfalls jeweils über einen weiteren, vorzugsweise als Rückwandbus ausgeführten Ein-/Ausgabebus IOB2, IOB3 miteinander verbunden, wobei der jeweilige Ein-/Ausgabebus IOB2, IOB3 über ein im Feldbus- Slave 7, 8 integrierten Ein-/ Ausgabe-Bus- Master 1 b, 1 c an den Feldbus angeschlossen sind.

In den Eingabe-/ Ausgabeeinheiten 11, 21, 71, 72, 81, 82 sind vorzugsweise jeweils drei Leiterplatten LP1, LPS1, LPS2 integriert, welche über wenigstens eine interne Kommunikationsverbindung IKB, IKB1, IKB2 miteinander Daten austauschen. Dabei werden über die erste Kommunikationsverbindung IKB1 nur Daten zu den Safety Control Board's gesendet. Über die zweite Kommunikationsverbindung IKB2 können Daten von und zu den Safety Control Board's gesendet werden. Dazu ist auf Safety Control Board's jeweils wenigstens ein interner Kommunikations-Slave vorgesehen, der mit den internen Kommunikationsverbindungen verbindbar ist. Die Kommunikationsverbindung IKB wird nur in nicht sicherheitsgerichteten Eingabe-/ Ausgabeeinheiten 11, 71, 81 für nicht sicherheitsgerichtete Datenübertragung verwendet.

Die elektrische und/oder mechanische Ausführung der Ein-/ Ausgabegeräte kann beispielsweise dem in der DE 10 2008 058 090 beschriebenen Aufbau der Ein-/ Ausgabemodule entsprechen.

Basierend auf einer bevorzugten 1002 Architektur des in der Figur 1 gezeigten Steuerungssystems umfassen die sicheren Einheiten 21, 72, 82 neben der ersten Leiterplatte LP1 für die nichtsicherheitsgerichtete Kommunikation zwei weitere Leiterplatten LPS1, LPS2 für die sicherheitskritischen bzw. sicherheitsgerichteten Funktionen. Die Kommunikation zwischen den weiteren Leiterplatten LPS1, LPS2 erfolgt mittels einer Synchronisationsverbindung IF2. Dazu sind auf den weiteren Leiterplatten LPS1, LPS2 wenigstens zwei, als Sicherheitsprozessoren ausgeführte, Verarbeitungseinheiten mit zugeordneten Speichern und Taktgebern vorgesehen. Die Sicherheitsprozessoren synchronisieren sich untereinander. Der Aufbau der Sicherheitsprozessoren und ihre Funktionsweise sind aus dem einschlägigen Stand der Technik bekannt.

Die Zentraleinheit CL kann, wie auch die Eingabe-/ Ausgabeeinheiten 11, 21 und die Kommunikationskoppler 5, 6, mittels eines Modulträgers auf einer unterschiedlich ausbaufähigen Grundplatte angeordnet sein, wobei die Eingabe-/ Ausgabeeinheiten 11, 21 direkt an die Zentraleinheit CL und den Kommunikationskoppler 5, 6 ankoppelbar sind. Die Grundplatte weist weiterhin einen Feldbusanschluss für eine Standard-Feldbusverbindung zu den dezentralen Einheiten 7, 8 und/oder dezentralen Stationen auf.

In einer besonderen Ausgestaltung ist die Grundplatte auf eine Norm- Hutschiene aufgeschnappt, wobei wenigstens eine der Eingabe-/ Ausgabeeinheiten 11, 21 ebenfalls auf die Hutschiene aufschnappbar und mit der jeweiligen Grundplatte elektrisch und mechanisch zusammensteckbar ist.

Vorteilhaft erweist sich weiterhin, dass Module der Zentraleinheit CL, der Eingabe-/ Ausgabeeinheiten 11, 21 und der Kommunikationskoppler 5, 6 alle untereinander kabellos über Steckverbindungen elektrisch verbindbar oder verbunden sind. Vorzugsweise sind die Zentraleinheit CL, die Eingabe-/ Ausgabeeinheiten 11, 21 und die Kommunikationskoppler 5, 6 jeweils mittels Steck- und/oder Rastmitteln lösbar miteinander verbindbar oder verbunden.

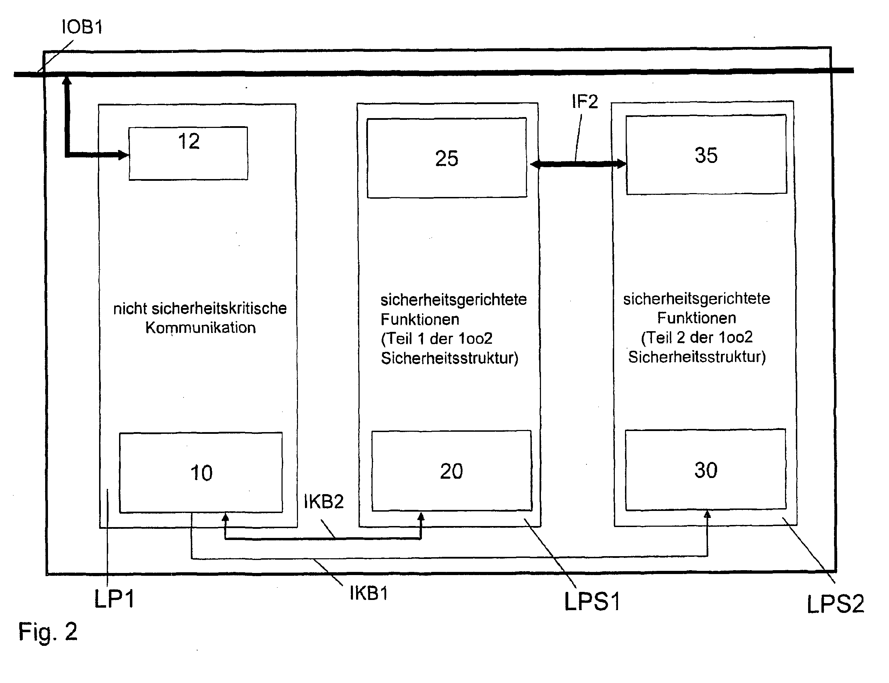

**Fig.** 2 zeigt eine detaillierte Ausführungsform des erfindungsgemäßen E-/A- Sicherheitsmoduls in einer 1002 Architektur mit zwei redundanten Safety Control Board's LPS1, LPS2 sowie die Kommunikation innerhalb des Sicherheitsmoduls und über den Ein-/Ausgabebus IOB1 und den daran anschließbaren Ein-/Ausgabe- Bus- Master 1.

Das Ein-/Ausgabe- Sicherheitsmodul umfasst eine als Kommunikations- Board ausgeführte erste Leiterplatte LP1 für Bereitstellung der nicht sicherheitskritischen Kommunikation über einen Ein/Ausgabe- Bus- Slave 12 und den daran anschließbaren, vorzugsweise als Rückwandbus ausgeführten Ein-/ und Ausgabe- Bus IOB1, mit einem internen Kommunikations- Master 10 und eine daran anschließbare, vorzugsweise als serielle Schnittstelle ausgeführte, interne Kommunikationsverbindung IKB1, IKB2.

Der Ein-/ und Ausgabe- Bus IOB1 ist dafür vorgesehen, das erfindungsgemäße E-/A Sicherheitsmodul mit der Zentraleinheit CL gemäß der Darstellung in Fig. 1 über den in der Zentraleinheit integrierten Ein-/Ausgabe- Bus- Master 1a zu verbinden.

Über die interne Kommunikationsverbindung IKB1, IKB2 ist das Kommunikations-Board LP1 mit zwei Leiterplatten LPS1, LPS2 mit sicherheitsgerichteten Ein-/Ausgabeschaltungen für sicherheitsgerichtete Funktionen verbunden, die auch als Safety Control Board's bezeichnet werden. Sicherheitsgerichteten Funktionen der Safety Control Board's sind beispielsweise Selbstüberwachungsmaßnahmen im Ein-/Ausgabe- Sicherheitsmodul, wie Vergleichstests zwischen den Kanälen, Selbsttests, Pausibilitätstests aber auch eine Überwachung auf Spannungsausfall, Kurzschluss, Überspannung oder Bereichsüberschreitung.

Auf den Safety Control Board's LPS1, LPS2 wird eine sicherheitsgerichtete Applikation 25, 35 ausgeführt, die zur Verarbeitung von sicheren Signalen in sicheren Eingabe-/ Ausgabeeinheiten dient.

Für den Datenaustausch bzw. die Synchronisation ist zwischen den Safety Control Board's LPS1, LPS2 eine Synchronisationsverbindung IF2 vorgesehen.

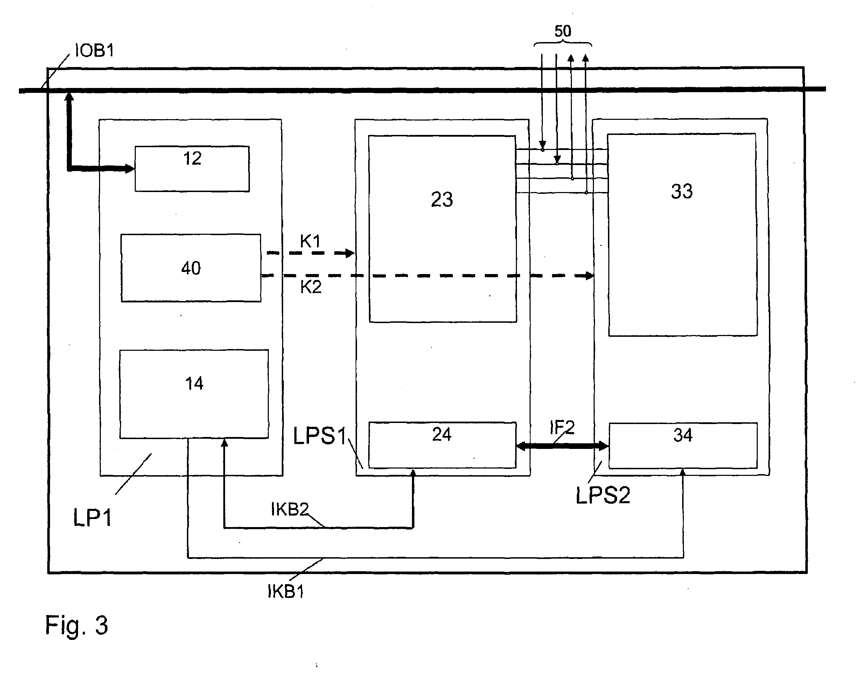

**Fig.** 3 zeigt eine beispielhafte Hardwarestruktur des erfindungsgemäßen Sicherheitsmoduls basierend auf einer 1002 Sicherheitsstruktur.

Die hier dargestellte beispielhafte Hardwarestruktur des Sicherheitsmoduls basiert auf einer 1002 Sicherheitsstruktur mit der ersten auf dem Kommunikationsbord LP1 angeordneten Verarbeitungseinheit 14 und den jeweils auf den Safety Control Board's LPS1, LPS2 angeordneten Sicherheitsprozessoren 24, 34, die nachfolgend als erster Sicherheitsprozessor 24, angeordnet auf dem ersten Safety Control Board LPS1, und als zweiter Sicherheitsprozessor 34, angeordnet auf dem zweiten Safety Control Board LPS2, bezeichnet werden.

Den als Sicherheitsprozessoren ausgeführten Verarbeitungseinheiten 24, 34 sind jeweils entsprechende Speicher und Taktgeber zugeordnet. Die Sicherheitsprozessoren 24, 34 sind so ausgeführt, dass sie sich gegenseitig überwachen. Dazu synchronisieren sich die Prozessoren 24, 35 untereinander über die Synchronisationsverbindung IF2.

Einer der beiden Sicherheitsprozessoren 24, 34, im gezeigtem Beispiel der erste Sicherheitsprozessor 24 des ersten Safety Control Board's LPS1, ist über einen separate internen Kommunikationskanal, auch als zweite interne Kommunikationsverbindung IKB2 bezeichnet, mit dem Kommunikations- Board LP1 so verbunden, dass das Kommunikations- Board LP1 die sicherheitsgerichteten Telegramme mit dem Safety Control Board's LPS1 austauschen kann.

Zur Spannungsüberwachung, beispielsweise auf Überspannung oder Spannungsausfall, ist eine Überwachungseinheit 40 vorgesehen, die vorzugsweise auf dem Kommunikations- Board angeordnet ist und jeweils mit den auf den Safety Control Board's LPS1, LPS2 angeordneten Ein-/Ausgangsschaltungen 23, 33 über die Verbindungen K1, K2 verbunden ist, um so die Spannungsüberwachung im Ein/Ausgabe- Sicherheitsmodul zu ermöglichen.

Durch die redundante Anordnung der Sicherheitsprozessoren 24, 34 ist im vorliegendem Ausführungsbeispiel nur der erste Sicherheitsprozessor 24 des ersten Safety Control Board's LPS1 dafür ausgeführt, sicherheitsgerichtete Telegramme zur Verarbeitungseinheit 14 des Kommunikationsbordes LP1 über die interne zweite Kommunikationsverbindung IKB2 zu übertragen.

In der beschriebenen 1002- Architektur ist der Sicherheitsprozessor 24, der direkt mit dem Kommunikations- Board LP1 Telegramme austauschen kann, nicht in der Lage ein Cyclic Redundancy Checksum (CRC - ein Verfahren zur Bestimmung eines Prüfwerts für Daten, um Fehler bei der Übertragung oder Speicherung erkennen zu können) zu berechnen, das zum Generieren von gültigen sicheren Telegramme über einer interne Kommunikationsverbindung notwendig ist. Diese CRC-Berechnung kann nur von dem redundanten Prozessor 34 durchgeführt und zum ersten Prozessor 24 über interne Verbindung IF2 mitgeteilt werden. Hiermit wird sichergestellt, dass beide Prozessoren an gültigen Telegrammen mitwirken. Dies ist erforderlich, um die Sicherheit des Systems beim Ausfall oder fehlerhafter Funktionsweise eines der beiden Prozessoren des Safety Controllers zu gewährleisten.

An Safety Control Board's LPS1, LPS2 sind Feldgeräte für sicherheitskritische Prozessen und/oder Anlagenkomponenten, auch als sicherheitsgerichtete Feldgeräte bezeichnet, mittels der sich gegenseitig überwachenden sicheren Ein-/Ausgabeschaltungen 23, 33 über eine Schnittstelle 50 anschließbar und über den Ein/Ausgabe- Bus- Slave 12 und den daran angeschlossenen externen Ein-/ und Ausgabe- Bus IOB1 ist beispielsweise die Zentraleinheit (CL) anschließbar.

Sichere Ein- und/oder Ausgabekanäle mit Schnittstelle 50 werden redundant auf beiden sicheren Leiterplatten LPS1, LPS2 verteilt und mit Hilfe von sicheren Schaltungen 23, 33 von sicheren Verarbeitungseinheiten 24, 34 verarbeitet.

## Patentansprüche

1. Sicherheitsmodul zum Anschluss an ein Automatisierungsgerät oder Automatisierungssystem, wobei das Automatisierungsgerät oder Automatisierungssystem zum Steuern von sicherheitskritischen und nichtsicherheitskritischen Prozessen und/oder Anlagenkomponenten vorgesehen ist, mit einem Kommunikations-Board (LP1) für die Bereitstellung einer nicht-sicherheitskritischen Kommunikation, dessen Verarbeitungseinheit (14) über einen Ein/Ausgabe- Bus- Slave (12) und einen daran angeschlossenen externen Ein-/ und Ausgabe- Bus (IOB1) an eine Zentraleinheit (CL) anschließbar ist, dadurch gekenntzeichnet, dass
- das Sicherheitsmodul neben dem Kommunikations- Board (LP1) für die Bereitstellung der nicht-sicherheitskritischen Kommunikation noch eine oder mehrere Leiterplatten (LSP1, LSP2) mit sicherheitsgerichteten Ein-/Ausgabeschaltungen (23), (33) für sicherheitsgerichtete Funktionen beinhaltet,
- das Kommunikations- Board (LP1) einen seriellen Kommunikations- Master (10) aufweist, welcher über wenigstens eine daran anschließbare Kommunikationsverbindung (IKB1) mit einer oder mehreren sicheren Verarbeitungseinheiten (24), (34), angeordnet auf einer oder mehreren der Leiterplatten (LSP1, LSP2) mit sicherheitsgerichteten Ein-/Ausgabeschaltungen (23), (33) für sicherheitsgerichtete Funktionen so verbunden ist, dass wenigstens eine der Leiterplatten (LSP1, LSP2) dafür vorgesehen ist, die vom Kommunikations- Board gesendeten Telegrammen zu empfangen,
- auf den Leiterplatten (LSP1, LSP2) für die sicherheitsgerichteten Funktionen jeweils wenigstens ein interner Kommunikations-Slave (20), (30) vorgesehen ist, der mit dem seriellen Kommunikationsmaster (10) über die internen Kommunikationsverbindung (IKB1) verbindbar ist,
- an die sicherheitsgerichteten Ein-/Ausgabeschaltungen (23, 33) über eine Schnittstelle (50) weitere Feldgeräte für sicherheitskritische Prozessen und/oder Anlagenkomponenten anschließbar sind,
- die Synchronisation zwischen den sicheren Verarbeitungseinheiten (24), (34) mittels einer Synchronisationsverbindung (IF2) ausführbar ist, und
- nur über einen der auf den Leiterplatten (LSP1, LSP2) für die sicherheitsgerichtete Funktionen befindlichen sicheren Verarbeitungseinheiten (24) sicherheitsgerichtete Telegramme von und/oder zur Verarbeitungseinheit (14) des Kommunikations- Boards (LP1) mittels wenigstens einer zweiten internen Kommunikationsverbindung (IKB2) übertragbar sind.

2. Sicherheitsmodul nach Anspruch 1, **dadurch gekennzeichnet, dass** die sicheren Verarbeitungseinheiten (24, 34) jeweils über einen internen Kommunikations-Slave (20, 30) und der internen Kommunikationsverbindungen (IKB1, IKB2) mit dem seriellen Kommunikationsmaster (10) des Kommunikations- Board's (LP1) verbunden sind.

3. Sicherheitsmodul nach Anspruch 1 oder 2, **dadurch gekennzeichnet, dass** das Sicherheitsmodul über den Ein-/ und Ausgabe- Bus (IOB) an einen Ein-/Ausgabe-Busmaster (1 a) einer Steuereinheit, die für die Steuerung des nicht sicherheitskritischen Prozesses und/oder der nicht sicherheitskritischen Anlagenkomponenten sowohl als auch für sicherheitskritische und/oder sicherheitskritische Anlagenkomponenten vorgesehen ist, anschließbar ist.

4. Sicherheitsmodul nach Anspruch 3, **dadurch gekennzeichnet, dass** sicherheitsgerichteten Telegramme von und zu den Leiterplatten (LPS1, LPS2) unter Nutzung des Black Channel Kommunikationsprinzips über den externen Ein-/ und Ausgabe- Bus- Master (1a) und den internen seriellen Kommunikations- Slave (20, 30) der Leiterplatten (LPS1, LPS2) mit für die sicherheitsgerichtete Funktionen übertragbar sind.

5. Sicherheitsmodul nach einem der vorstehenden Ansprüche, **dadurch gekennzeichnet, dass** die zweite interne Kommunikationsverbindung (IKB2) so ausgeführt ist, dass darüber auch die vom Kommunikations- Board (LP1) gesendeten Telegramme empfangbar sind.

6. Sicherheitsmodul nach einem der vorstehenden Ansprüche, **dadurch gekennzeichnet, dass** die gegenseitige Synchronisation und/oder Überwachung der sicheren Verarbeitungseinheiten (24), (34) über wenigstens eine Synchronisationsverbindung (IF2) ausführbar ist.

7. Sicherheitsmodul nach einem der vorstehenden Ansprüche, **dadurch gekennzeichnet, dass** von den sicheren Verarbeitungseinheiten (24), (34) nur eine Verarbeitungseinheit über die zweite interne Kommunikationsverbindung (IKB2) sicherheitsgerichtete Telegramme zum Kommunikationsmaster (10) des Kommunikations- Board (LP1) direkt sendet.

8. Sicherheitsmodul nach einem der vorstehenden Ansprüche, **dadurch gekennzeichnet, dass** es in einem modular aufgebauten Steuersystem einsetzbar ist.

9. Verwendung des Sicherheitsmoduls nach einem der vorstehenden Ansprüche in Automatisierungsgeräten oder Automatisierungssystemen der Prozessautomation oder Maschinensteuerung als zentrales oder dezentrales Ein- und/oder Ausgabegerät.

## Claims

1. Safety module for connection to an automation device or automation system, wherein the automation device or automation system is provided for the control of safety-critical and non-safety-critical processes and/or plant components, comprising a communication board (LP1) for providing non-safety-critical communication, the processing unit (14) of which can be connected (CL) via an input/output bus slave (12) and an external input/output bus (IOB1) connected thereto to a central processing unit, **characterized in that**
- the safety module, in addition to the communication board (LP1) for providing the non-safety-critical communication, comprises one or more circuit boards (LSP1, LSP2) also having safety-oriented input/output circuits (23), (33) for safety oriented functions,
- the communication board (LP1) has a serial communication master (10) which is connected via at least one communication link (IKB1) connectable thereto to one or more secure processing units (24), (34) arranged on one or more of the circuit boards (LPS1, LPS2) having safety-oriented input/output circuits (23), (33) for safety-oriented functions, in such a manner that at least one of the circuit boards (LPS1, LPS2) is provided for receiving the messages sent by the communication board,
- on the circuit boards (LPS1, LPS2) for the safety-oriented functions in each case at least one internal communication slave (20), (30) is provided which can be connected to the serial communication master (10) via the internal communication link (IKB1),
- further field devices for safety-critical processes and/or plant components can be connected to the safety-oriented input/output circuits (23, 33) via an interface (50),
- the synchronization between the secure processing units (24), (34) can be carried out by means of a synchronization link (IF2), and
- safety-oriented messages can be transmitted from and/or to the processing unit (14) of the communication board (LP1) by means of at least one second internal communication link (IKB2) only via one of the secure processing units (24) located on the circuit boards (LPS1, LPS2) for the safety-oriented functions.

2. Safety module according to Claim 1, **characterized in that** the secure processing units (24, 34) are in each case connected to the serial communication master (10) of the communication board (LP1) via an internal communication slave (20, 30) and the internal communication links (IKB1, IKB2).

3. Safety module according to Claim 1 or 2, **characterized in that** the safety module can be connected via the input/output bus (IOB) to an input/output bus master (1a) of a control unit which is provided for the control of the non-safety-critical process and/or of the non-safety-critical plant components and also for safety-critical and/or safety-critical plant components.

4. Safety module according to Claim 3, **characterized in that** safety-oriented messages can be transmitted from and to the circuit boards (LPS1, LPS2) by utilizing the black channel communication principle via the external input/output busmaster (1a) and the internal serial communication slave (20, 30) of the circuit boards (LPS1, LPS2) also for the safety-oriented functions.

5. Safety module according to one of the preceding claims, **characterized in that** the second internal communication link (IKB2) is constructed in such a manner that the messages sent by the communication board (LP1) can also be received via it.

6. Safety module according to one of the preceding claims, **characterized in that** the mutual synchronization and/or monitoring of the secure processing units (24), (34) can be carried out via at least one synchronization link (IF2).

7. Safety module according to one of the preceding claims, **characterized in that** of the secure processing units (24), (34), only one processing unit sends safety-oriented messages directly to the communication master (10) of the communication board (LP1) via the second internal communication link (IKB2).

8. Safety module according to one of the preceding claims, **characterized in that** it can be used in a modularly constructed control system.

9. Use for the safety module according to one of the preceding claims in automation devices or automation systems of process automation or machine control as a central or decentralized input and/or output device.

## Revendications

1. Module de sécurité à raccorder à un appareil d'automatisation ou à un système d'automatisation, l'appareil d'automatisation ou le système d'automatisation étant prévu pour commander des processus et/ou des composants de l'installation critiques pour la sécurité et non critiques pour la sécurité, avec un tableau de communication (LP1) pour la mise à disposition d'une communication non critique pour la sécurité dont l'unité de traitement (14) peut être raccordée à une unité centrale (CL) via un esclave de bus d'émission / réception (12) et un bus d'émission / réception (IOB1) externe y étant raccordé, **caractérisé en ce que** :
- le module de sécurité contient, outre le tableau de communication (LP1) servant à la mise à disposition de la communication non critique pour la sécurité, une ou plusieurs plaques conductrices (LSP1, LSP2) dotées de circuits d'émission / réception (23), (33) nécessitant une exécution sécurisée pour les fonctions nécessitant une exécution sécurisée ;
- le tableau de communication (LP1) comporte un maître de communication sérielle (10) relié de telle sorte à une ou plusieurs unités de traitement sécurisées (24), (34), disposées sur une ou plusieurs des plaques conductrices (LSP1, LSP2) dotées de circuits d'émission / réception (23), (33) nécessitant une exécution sécurisée pour les fonctions nécessitant une exécution sécurisée, via au moins une liaison de communication (IKB1) pouvant y être raccordée, qu'au moins une des plaques conductrices (LSP1, LSP2) est prévue pour recevoir les télégrammes envoyés par le tableau de communication ;
- au moins un esclave de communication interne (20) (30) est respectivement prévu sur les plaques conductrices (LSP1, LSP2) pour les fonctions nécessitant une exécution sécurisée, ledit esclave pouvant être relié au maître de communication sérielle (10) via la liaison de communication interne (IKB1) ;
- d'autres appareils de champ prévus pour des processus et/ou des composants de l'installation critiques pour la sécurité peuvent être raccordés aux circuits d'émission / réception (23, 33) nécessitant une exécution sécurisée via une interface (50) ;
- la synchronisation entre les unités de traitement sécurisées (24), (34) peut être réalisée au moyen d'une liaison de synchronisation (IF2) ; et
- les télégrammes nécessitant une exécution sécurisée en provenance et/ou à destination de l'unité de traitement (14) du tableau de communication (LP1) ne peuvent être transmis que via une des unités de traitement sécurisées (24) se trouvant sur les plaques conductrices (LSP1, LSP2) servant aux fonctions nécessitant une exécution sécurisée, à l'aide d'au moins une deuxième liaison de communication interne (IKB2).

2. Module de sécurité selon la revendication 1, **caractérisé en ce que** les unités de traitement sécurisées (24, 34) sont respectivement reliées au maître de communication sérielle (10) du tableau de communication (LP1) via un esclave de communication interne (20, 30) et les liaisons de communication internes (IKB1, IKB2).

3. Module de sécurité selon la revendication 1 ou 2, **caractérisé en ce que** le module de sécurité peut être raccordé, via le bus d'émission / réception (IOB), à un maître de bus d'émission / réception (1a) d'une unité de commande prévue pour commander le processus non critique pour la sécurité et/ou les composants de l'installation non critiques pour la sécurité ainsi que les composants de l'installation critiques pour la sécurité et/ou critiques pour la sécurité.

4. Module de sécurité selon la revendication 3, **caractérisé en ce que** les télégrammes nécessitant une exécution sécurisée peuvent être transmis en provenance et à destination des plaques conductrices (LPS1, LPS2) en utilisant le principe de communication du canal noir via le maître de bus d'émission / réception externe (1a) et l'esclave de communication sérielle interne (20, 30) des plaques conductrices (LPS1, LPS2) contenant les fonctions nécessitant une exécution sécurisée.

5. Module de sécurité selon l'une quelconque des revendications précédentes, **caractérisé en ce que** la deuxième liaison de communication interne (IKB2) est réalisée de telle sorte que les télégrammes émis via celle-ci peuvent également être reçus par le tableau de communication (LP1).

6. Module de sécurité selon l'une quelconque des revendications précédentes, **caractérisé en ce que** la synchronisation et/ou la surveillance mutuelle des unités de traitement sécurisées (24), (34) peut être réalisée via au moins une liaison de synchronisation (IF2).

7. Module de sécurité selon l'une quelconque des revendications précédentes, **caractérisé en ce que** parmi les unités de traitement sécurisées (24), (34), seule une unité de traitement envoie directement des télégrammes nécessitant une exécution sécurisée au maître de communication (10) du tableau de communication (LP1) via la deuxième liaison de communication interne (IKB2).

8. Module de sécurité selon l'une quelconque des revendications précédentes, **caractérisé en ce que** ledit module peut être utilisé dans un système de commande structuré de façon modulaire.

9. Utilisation du module de sécurité selon l'une quelconque des revendications précédentes dans des appareils d'automatisation ou des systèmes d'automatisation des procédés ou un élément de commande de machine servant d'appareil d'émission et/ou de réception central ou décentralisé.
